# EUROPÄISCHE PATENTSCHRIFT

(11) **EP 2 630 418 B1**
(45) Veröffentlichungstag und Bekanntmachung des Hinweises auf die Patenterteilung: **17.08.2016**
(21) Anmeldenummer: 11708788.2
(22) Anmeldetag: 09.03.2011
(51) Int. Cl.: F24J 2/22, B21D 53/04, F24J 2/04, F24J 2/20, F24J 2/46

(54) **VERFAHREN ZUR HERSTELLUNG VON HALBZEUGEN FÜR EINEN SOLARKOLLEKTOR**
METHOD FOR PRODUCING SEMI-FINISHED GOOD FOR A SOLAR COLLECTOR
PROCÉDÉ DE PRODUCTION DE DEMI-PRODUIT CONÇU POUR UN CAPTEUR SOLAIRE

(30) Priorität: 11.03.2010 DE 102010002777
(43) Veröffentlichungstag der Anmeldung: 28.08.2013
(73) Patentinhaber: Universität Kassel, 34125 Kassel (DE)
(72) Erfinder: WILHELMS, Claudius, 34125 Kassel (DE); HEINZEN, Roland, 33100 Paderborn (DE); VAJEN, Klaus, 34125 Kassel (DE); SCHMITT, Bastian, 34119 Kassel (DE); LAUTERBACH, Christoph, 34119 Kassel (DE)
(74) Vertreter: REHBERG HÜPPE + PARTNER
(86) Internationale Anmeldenummer: PCT/EP2011/053539
(87) Internationale Veröffentlichungsnummer: WO 2011/110592

(56) Entgegenhaltungen:
- WO-A1-02/26457
- DE-A1- 2 518 683
- DE-A1- 2 536 687
- DE-A1- 2 809 031
- DE-A1-102005 034 970
- FR-A1- 2 476 805
- US-A- 4 010 733
- US-A- 4 228 851

## Beschreibung

### TECHNISCHES GEBIET DER ERFINDUNG

Die Erfindung betrifft ein Verfahren zur Herstellung eines Halbzeugs für einen Solarkollektor.

### STAND DER TECHNIK

Solarkollektoren dienen einer Erwärmung eines Fluids als Wärmeträger mittels Sonneneinstrahlung. Mit der gewonnenen thermischen Energie kann beispielsweise Trinkwasser oder Brauchwasser erwärmt werden, ein Heizsystem betrieben werden oder Kälte gewonnen werden. Einsatz finden Anlagen mit Solarkollektoren zur Trinkwassererwärmung und ggf. Heizungsunterstützung im Wohnhausbereich. Weiterhin können Anlagen mit Solarkollektoren auch im Industriebereich bei Nieder- und Mitteltemperaturanwendungen sinnvoll eingesetzt werden.

US 4,296,736 offenbart einen Solarkollektor, der mit einem Solarpaneel mit einem gefalteten, strukturell steifen Element gebildet ist, so dass der Solarkollektor unter Umständen auch ohne unterstützende ergänzende Struktur größere Dachbereiche überspannen kann. Die vorgeschlagene Faltung ist zickzackförmig. In dieser zickzackförmigen Struktur sind die Flanken abwechselnd mit Kollektorplatte und Verbindungsplatten gebildet. Ein Einbau des Solarkollektors ist horizontal, vertikal oder unter einem beliebigen Neigungswinkel möglich. Zwischen den abwechselnden Kollektorplatten und Verbindungsplatten können zusätzliche ebene Anbindungsbereiche vorgesehen sein, mittels welcher der Solarkollektor mit einer Gebäudewand verschraubt oder anderweitig verbunden werden kann. Die Unterseite des Solarkollektors ist mit einer ebenfalls zickzackförmig hin- und hergehenden Isolierung konstanter Schichtdicke versehen. In den Kollektorplatten erstrecken sich quer zur Zickzackform verlaufende parallele Kanäle für das Fluid in einem Basiselement. Die außen liegende Oberfläche ist zur Erhöhung der Absorption von Sonneneinstrahlung geeignet behandelt, beispielsweise durch Schwärzung. Dieser Oberfläche ist unter Ausbildung eines isolierenden Zwischenraums, der mit Luft gefüllt ist, nach außen beabstandet eine durchsichtige Platte vorgeordnet. Die Kollektorplatten, insbesondere das genannte Basiselement, können aus Metall bestehen. Für eine weitere Ausführungsform ist ein zickzackförmiges Strukturelement mit Zement gebildet. Zur Bildung der Kollektorplatten ist in einer Ausnehmung des Zements ein Dämmmaterial, ein Kanäle für das Medium ausbildendes Blechmaterial, eine die Kanäle außenseitig verschließende absorbierende Platte sowie eine beabstandet angeordnete Glasplatte in der genannten Reihenfolge angeordnet. Weiterhin offenbart die Druckschrift in einer Fig. 20 einen Solarkollektor, bei welchem zwischen einem trapezförmigen Blech und einem Dämmmaterial, offensichtlich mit einem zusätzlichen halbkanalförmig gebogenen Blech, Luftkanäle ausgebildet werden. Alternativ oder zusätzlich können die Trapezquerschnitte des Trapezblechs auf der außen liegenden Seite mit einer Abdeckung aus Glas Kanäle für das Fluid, hier Luft, ausbilden. Die Herstellung der in der Druckschrift beschriebenen Solarkollektoren ist sehr aufwändig, was zu erhöhten Kosten führt. Gemäß dieser Druckschrift bilden mehrere Paneele Teilflächen mit Kollektorplatten und Verbindungsplatten. Mehrere Paneele sind mit einer gemeinsamen tragenden Schicht aus Beton oder einer gemeinsamen isolierenden Schicht versehen, so dass eine separate Verbindung von der tragenden oder isolierenden Schicht mit den Paneelen im Herstellungsprozess oder vor Ort auf der Baustelle erforderlich ist.

US 4,228,851 offenbart einen Solarkollektor, bei welchem zwei Paneele aus Kunststoff mit trapezförmigem Querschnitt derart aufeinander angeordnet werden, dass die geneigten Seitenschenkel der Paneele unter Abdichtung zur Anlage aneinander kommen, während die parallelen, in Längsrichtung der Paneele verlaufenden Grundschenkel beabstandet voneinander angeordnet sind, so dass diese jeweils wechselseitig in Höhenrichtung versetzte Kanäle für das Fluid ausbilden. Die Paneele sind miteinander verklebt. Außenseitig kann eine Schutzschicht an dem derart gebildeten Solarkollektor angeordnet sein, um das Kunststoffmaterial der Paneele gegenüber ultravioletten Anteilen der Sonnenstrahlen zu schützen. Ebenfalls vorgeschlagen wird eine entsprechende Ausbildung der Paneele aus Metall. Vorzugsweise findet für die Paneele allerdings ein schwarz eingefärbter Kunststoff Einsatz. Die Fertigung der Paneele erfolgt in einem Vakuum-Formgebungsverfahren. Integral von den Paneelen können in entsprechender Weise im Endbereich der Paneele Querkanäle ausgebildet sein. Diese Ausbildung bedingt eine Fertigung der Paneele und des Solarkollektors in einer vorgegebenen Größe, die in der Druckschrift mit 4 ft x 4 ft angegeben ist. Der Solarkollektor ist offensichtlich nicht als Strukturelement des Gebäudes, sondern als ergänzend zu einer Gebäudewand vorgesehener an dieser abgestützter Solarkollektor ausgebildet.

EP 2 019 554 A offenbart einen Solarkollektor mit fest vorgegebener rechteckiger Geometrie.

EP 0 048 706 A2 offenbart einen Solarkollektor, der auf einem Welldach montiert werden kann. Der Solarkollektor besitzt Querstreben, im Bereich welcher dieser mit dem Welldach und einer Unterkonstruktion verschraubt werden kann. An den Querstreben sind jeweils separate Kanalelemente gehalten, die mit einem doppelwandigen Halbschalenelement gebildet sind, welches einen teilkreisringförmigen Hohlraum ausbildet. Im Hohlraum wird das Fluid des Solarkollektors geführt. In den axialen Endbereichen sind die parallel orientierten Kanalelemente mit Anschlussflanschen zur Zu- und Abfuhr des Fluids gekoppelt.

DE 201 16 551 U1 offenbart einen Solarkollektor mit Profilblechen mit komplexer Profilgeometrie. Die Profilbleche bilden im Bereich von Seitenschenkeln eines trapezförmigen Profilverlaufs Sicken aus, in welchen transparente Kunststoffplatten gehalten sind, wobei Kanäle für ein Fluid zwischen dem Profilblech und der transparenten Kunststoffplatte ausgebildet sind. Die nach außen weisende Seite der Profilbleche kann mit einer wärmeabsorbierenden Beschichtung versehen sein. Der derart gebildete Solarkollektor wird unter Zwischenschaltung eines Kerns aus Kunststoff-Hartschaum oder Mineralwolle, ggf. unter Zwischenschaltung eines Trägers, mit einer profilierten oder glatten Innenschale aus Metall verschraubt.

DE 196 06 293 C2 offenbart einen Solarkollektor vorgegebener Größe mit zwei Kunststoffplatten, die eine Oberseite sowie eine Unterseite des Kollektors bilden. Die Unterseite des Kollektors wird an dem Dach eines Gebäudes befestigt. Die die Oberseite des Kollektors bildende Kunststoffplatte besteht aus einem transparenten Kunststoff, während die untere Kunststoffplatte aus einem nicht transparenten, schwarz eingefärbten Kunststoff hergestellt ist. Während die die Oberseite bildende Kunststoffplatte eben ausgebildet ist, ist die untere Kunststoffplatte zur Bildung wannenartiger Hohlkammern schalenprofilartig tiefgezogen. An die Kunststoffplatten sind Anschlussstutzen mit halbschalenförmigem Stutzenfortsatz angeformt. Weiterhin sind Sammelkammern für die Zu- und Abfuhr des Fluids vorgesehen. Die beiden Kunststoffplatten werden in einem sogenannten Twin-Sheet-Verfahren in einem einzelnen Ar- beitsgang gemeinsam erhitzt, gleichzeitig tiefgezogen und durch ein entsprechendes flächiges Gegeneinanderpressen miteinander verschweißt.

DE 28 09 031 C2 offenbart einen Solarkollektor und ein Verfahren zur Herstellung eines Halbzeugs für einen Solarkollektor gamäß dem Obergegriff das Anspruchs 1, der mit Dachlatten verschraubt wird oder über ein endseitig den Solarkollektor haltendes Verbindungsstück mit einer Auflagefläche verbunden wird. Der Solarkollektor selbst ist wellenartig oder trapezförmig profiliert, wobei Berge einer wellenartigen Profilgebung von einem Isoliermaterial unterfüttert sein können.

DE 41 38 367 A1 offenbart ein flächiges Schallschutzelement in Sandwichbauweise mit einer schallabsorbierenden Grundplatte aus recyceltem Gummi sowie darauf angebrachtem Flächenelement in Ausbildung als Aluminiumwellenstegplatte. Wellenstege der Aluminiumwellenstegplatte schließen Hohlräume ein, die zum Wärmeaustausch mit einer geeigneten Flüssigkeit gefüllt werden können. Unterhalb der Grundplatte ist eine profilierte Styroporplatte angeordnet, deren Profil formschlüssig in ein Dachprofil passt. Neben dem genannten Formschluss kann eine stoffschlüssige Verbindung der Styroporplatte mit dem Dachprofil erfolgen. Eine Verbindung benachbarter Schallschutzelemente erfolgt über im Bereich der Stirnseiten der Schallschutzelemente angeordnete Steckprofile.

EP 1 201 843 B1 offenbart ein Dachelement mit einem plattenförmigen Sandwichkörper mit einem Kern aus Kunststoff-Hartschaum oder Mineralfasern, dessen beide Oberflächen durch eine flache oder strukturierte Schale oder profilierte Schale, beispielsweise einem Trapezprofil aus Stahlblech, abgedeckt sind. Zur Erstellung von Solardächern können an derartigen Dachelementen zusätzliche Solarzellen mit fest vorgegebener Geometrie abgestützt werden.

WO 02/26457 A1 offenbart die Herstellung von Formkörpern aus Formmassen in einem kontinuierlichen Herstellungsprozess unter Einsatz einer sogenannten Doppelbandanlage. Bei einer derartigen Doppelbandanlage sind das Oberband sowie das Unterband mit einzelnen Segmenten aus Edelstahl ausgebildet, die sich unter hermetischer Abdichtung zu einem geschlossenen quaderförmigen Reaktionsraum ergänzen. Vor Zusammenführung des Oberbands und des Unterbands unter hermetischer Abdichtung des Reaktionsraums wird auf das Unterband eine Mischung eines Ansatzes pastöser oder fließfähiger Konsistenz gepumpt. In dem Reaktionsraum schäumt die zugeführte Masse bis zur Füllung desselben auf. Hieran anschließend setzt ein Härtungsprozess ein, der mit Verlassen der Doppelbandanlage so weitgehend abgeschlossen ist, dass das erzeugte rechteckige Schaumstoffprodukt in nachfolgenden Anlagen abgelängt und verpackt werden kann. In der Druckschrift sind auch die möglichen einsetzbaren Materialien genannt.

WO 2007/025886 A1 beschreibt zur Dämmung geeignete Hartschäume, die auch im Rahmen der vorliegenden Erfindung einsetzbar sind, hinsichtlich ihrer Zusammensetzung und Herstellung.

US 4,010,733 offenbart ein tragendes und dämmendes Dachelement mit Paneelen zur Führung eines Fluids. Die Kanäle werden hergestellt durch Druckbeaufschlagung nicht miteinander verschweißter Teilbereiche der Fläche mit hiermit einhergehender plastischer Verformung derselben.

Gemäß WO 02/18846 A2 wird ein Flachkollektor-Modul gebildet, in dem auf einem Metallblech-Paneel, beispielsweise aus einer Zink-Titan-Legierung und mit mäanderförmiger Profilbildung, gitterartige Kapillar-Röhrchen angeordnet werden. Eine Verbindung zwischen Metallblech-Paneel und den Kapillar-Röhrchen erfolgt über ein Flammspritzen, welches zu einer Verbesserung des Wärmeübergangs führen soll. Eine ergänzende thermoisolierende Schaumstoffschicht, die geeignete Rillen für den Eintritt der Kapillar-Röhrchen besitzen muss, wird hieran anschließend an das Metallblech-Paneel angeklebt. Schließlich findet eine zusätzliche Versteifungsplatte Einsatz.

DE 200 22 009 U1 offenbart ein selbsttragendes, heliothermisches Flachkollektor-Modul, bei welchem grundsätzlich Rohre in von Metallblech-Paneelen ausgebildeten Halterungen gehalten sind. Die Halterungen können ein längliches Ω- oder U-Profil bilden. Das Flachkollektor-Modul ist mit dem Metallblech-Paneel sowie einer thermoisolierenden Schicht, insbesondere einem Hartschaum-Kern, gebildet, womit dieses eine erhöhte Steifigkeit und Stabilität besitzen soll, so dass das Flachkollektor-Modul als selbsttragendes Bauteil ausgebildet sein kann. Hierzu werden als Halbzeuge Hartschaumplatten verwendet, in welche Auskehlungen eingefräst werden, in welchen dann die Rohre mit Halterungen angeordnet sind. Der derartige Hartschaum-Kern wird an das Metallblech-Paneel angeklebt. Für eine nicht dargestellte Ausführungsform sollen Metallblech-Paneele einstückig mit Trägerschienen als Strangpressprofil hergestellt werden, beispielsweise aus Aluminium. Ein solches Strangpressprofil soll dann mit dem entsprechend ausgekehlten Hartschaum-Kern verklebt werden. Ebenfalls denkbar ist es, ein einstückiges Strangpressprofil anzufertigen, bei dem anstelle der Trägerschienen zur Aufnahme von Rohren innere Kanäle vorgesehen sind, so dass auf zusätzliche Rohre verzichtet werden soll.

DE 196 09 001 A1 beschreibt den Einsatz eines Profilelements für einen Solarkollektor, bei welchem zwischen einem oberen Trapezprofil und einem unteren Trapezprofil eine Isolierung angeordnet ist, womit das Profilelement eine erhöhte Stabilität besitzen soll und eine verbesserte Wärmedämmung gewährleisten soll. Möglich ist alternativ der Einsatz einer dreieckförmigen oder abgerundeten Profilgebung. Von dem Profilelement außenseitig gebildete Kanäle sind nach außen abgedeckt durch eine Abdeckung aus Glas. Das Fluid des Solarkollektors wird in den derart gebildetem und begrenzten Kanälen in einem Rohrsystem geführt. US 4,192,287 und DE 197 25 407 A1 offenbaren weitere Solarkollektoren, bei welchen das Fluid in Rohren geführt ist.

DE 25 18 683 A1 und FR 2 308 892 betreffen Elemente für einen Wärmeübertrager, in denen mindestens ein dünnes Aluminiumband mäanderförmig geformt ist und mit einer Siegelschicht versehen ist. Die Druckschriften offenbaren vielfältige Anordnungsmöglichkeiten für diese mäanderförmigen Elemente: Für den Einsatz als Solarkollektor wird vorgeschlagen, dass das mäanderförmige Element im Bereich von unteren Grundschenkeln mit einem glatten, ebenfalls mit einer Siegelschicht beschichteten Aluminiumband verschweißt wird. Obere Grundschenkel werden mit einer transparenten, UV-beständigen Abdeckfolie durch Versiegeln der Oberflächen verbunden. So sollen zwischen Abdeckfolie und mäanderförmigem Aluminiumband luftgefüllte Kanäle erzeugt werden, in denen die reflektierte Strahlung in Form des Treibhauseffektes besser genutzt wird, um den Wirkungsgrad des Solarkollektors zu verbessern. Für andere offenbarte Ausführungsformen kommen zwei mäanderförmig geformte Aluminiumbänder mit Siegelschicht zum Einsatz, wobei eine Verschweißung der unteren Grundschenkeln des einen mäanderförmigen Aluminiumbands mit den oberen Grundschenkeln des anderen Aluminiumbands erfolgt, während abseits der genannten Grundschenkel die beiden Aluminiumbänder großflächige sechseckige Kanäle ausbilden. Für eine weitere Ausführungsform erstreckt sich zwischen den beiden mäanderförmigen Aluminiumbändern ein weiteres glattes, mit einer Siegelschicht versehenes Aluminiumband.

US 7,089,706 B2 betrifft nicht selbsttragend ausgebildete Kanäle, welche an einer Außenfläche eines Gebäudes, unter Umständen auch an einem Dach, verankert werden können. Die Paneele sind mit zwei metallischen Flächen gebildet, zwischen welchen ein geschäumtes Dämmmaterial angeordnet ist. Hierbei bildet das obere Blech einerseits Rippen aus, mittels welchen eine Verbindung mit benachbarten Paneelen geschaffen werden kann. Andererseits bildet das obere Blech Rippen in weiterem Sinne aus, welche einen zylindrischen Innenraum besitzen, der unmittelbar für die Führung eine Fluids benutzt werden kann oder durch welchen sich ein zusätzliches Rohr erstrecken kann, in welchem ein Fluid geführt wird. Die Paneele können von oben abgedeckt sein durch eine transparente Abdeckung. Zwischen der transparenten Abdeckung und dem oberen Blech sind Hohlräume gebildet.

DE 25 36 697 A1 offenbart die Gestaltung eines Solarkollektors mit einem einseitig offenen Basisteil, welches unter Ausbildung eines Innenraums durch eine strahlungsdurchlässige Deckplatte verschlossen ist. In dem Innenraum sind Strömungskanäle zwischen zwei Formteilen gebildet, welche im Teilquerschnitt trapezförmig ausgebildet sind. Grundschenkel der trapezförmigen Teilquerschnitte sind entsprechend der gewünschten Höhe der Strömungskanäle beabstandet voneinander angeordnet, während Seitenschenkel abdichtend aneinander anliegen. Hierbei sind Strömungskanäle ausschließlich zwischen den oberen Grundschenkeln der beiden Formteile gebildet.

Weiterer Stand der Technik ist aus WO 99/55984 und AT 348202 bekannt.

### AUFGABE DER ERFINDUNG

Der Erfindung liegt die Aufgabe zugrunde, ein Verfahren zur Herstellung eines kostengünstigen, unter Umständen multifunktional einsetzbaren Halbzeugs für einen Solarkollektor vorzuschlagen, wobei insbesondere eine kontinuierliche Fertigung mit einer großen Variabilität der Abmessungen des Halbzeugs ermöglicht sein soll.

### LÖSUNG

Die Aufgabe der Erfindung wird erfindungsgemäß durch ein Verfahren zur Herstellung eines Halbzeugs für einen Solarkollektor gemäß den Merkmalen des Patentanspruchs 1 gelöst. Weitere Ausgestaltungen eines derartigen erfindungsgemäßen Verfahrens ergeben sich entsprechend den abhängigen Patentansprüchen 2 bis 10.

### BESCHREIBUNG DER ERFINDUNG

Die Erfindung betrifft ein Halbzeug für einen Solarkollektor beliebiger Bauart. Das Halbzeug kann insbesondere durch Kopplung mit Nachbarelementen oder Anschlusselementen und/oder der Aufbringung weiterer Schichten, von Befestigungselementen und ähnlichem zu einem Solarkollektor ergänzt werden und mit einem Gebäude oder einem Untergrund verbunden werden.

Das Halbzeug ist mit einer Materialbahn gebildet aus einem beliebigen Material, welches vorzugsweise eigensteif, steif oder starr ausgebildet ist oder in gewissem Ausmaß elastisch verformbar ist. Die Materialbahn ist grundsätzlich eben oder als flächige Materialbahn (in einem vergrößerten Maßstab) ausgebildet, während die Materialbahn (in einem kleineren Maßstab) im Querschnitt ein mäanderförmiges Profil besitzt, worunter ein beliebiges mehrfach hin- und hergehendes Profil verstanden wird, beispielsweise ein Sägezahnprofil mit gleichen oder unterschiedlichen Flankensteigungen, ein Trapezprofil mit gleichen oder unterschiedlichen Flankensteigungen oder eine Art Wellenprofil. Ein derartiges mäanderförmiges Profil ist mit Grundschenkeln sowie nach außen divergierenden Seitenschenkeln ausgebildet, wobei die Grundschenkel im Wesentlichen parallel zu der Ebene orientiert sind, in welcher sich die Materialbahn erstreckt. Für den Fall einer kurven- oder wellenförmigen Profilgebung ist ein derartiger Grundschenkel ebenfalls kurvenförmig ausgebildet, was dann auch für nach außen divergierenden Seitenschenkel gilt.

Eine derartige Materialbahn wird erfindungsgemäß multifunktional genutzt:
- In einer ersten Funktion begrenzen jeweils die Grundschenkel und diesem Grundschenkel benachbarte Seitenschenkel Strömungskanäle, in welchen das die Solarenergie aufnehmende Fluid aufgenommen und geführt werden kann.
- Entsprechend einer zweiten Funktion führt die mäanderförmige Profilgestaltung bei unter Umständen einfacher Herstellung zu einem bereits verhältnismäßig steifen Bauelement, welches insbesondere ein großes Flächenträgheitsmoment in Folge des mäanderförmigen Profils besitzt.
- Entsprechend einer weiteren Funktion ist an die Unterseite der genannten Materialbahn eine Trag- und/oder Dämmschicht stoffschlüssig angebunden oder angespritzt. Damit kann die Materialbahn während des Erstellens der Trag- und/oder Dämmschicht als Trägermaterial für dieselbe dienen und zur geeigneten Konturbildung der Trag- und/oder Dämmschicht genutzt werden.

- Mit dem Verbund aus Trag- und/oder Dämmschicht ist das Halbzeug kompakt, kostengünstig herstellbar und besitzt gleichzeitig eine Steifigkeit, die ausreichend ist, dass der derart gebildete Solarkollektor nicht von außen auf eine tragende Wand des Gebäudes oder ein Dach aufgesetzt und an dieser oder diesem abgestützt werden muss. Vielmehr ist zumindest möglich, dass der mit dem erfindungsgemäßen Halbzeug gebildete Solarkollektor als selbsttragende Gebäudewand oder Dach einsetzbar ist. Für eine derartige vorteilhafte Nutzung des erfindungsgemäßen Halbzeugs bildet somit das Halbzeug bzw. der Solarkollektor die Begrenzung eines Raumes oder Daches eines Gebäudes, ohne das eine zusätzliche Gebäudewand oder ein Dach vorgesehen werden müssen. Dies führt zu einer drastischen Kostenreduktion, beispielsweise bei einer Sanierung eines Gebäudes.
- Durch das geringe Eigengewicht können diese Solarkollektoren auch Einsatz auf statisch knapp bemessenen Dächern finden.

Vorstehend aufgeführte Funktionen können alternativ oder kumulativ genutzt werden.

Für aus dem eingangs genannten Stand der Technik bekannte Ausführungsformen, vgl. beispielsweise US 4,296,736, sind eine mäanderförmige Materialbahn und eine Trag- und/oder Dämmschicht separat voneinander ausgebildet, was dazu führt dass eine aufwändige werkseitige Montage und Verbindung von Materialbahn und Trag- und/oder Dämmschicht erfolgen muss oder der Aufwand auf der Baustelle erhöht ist. Erfindungsgemäß ist hingegen das Halbzeug mit der Materialbahn und der stoffschlüssig an die Unterseite der Materialbahn angebundenen Trag- und/oder Dämmschicht einstückig ausgebildet und vorgefertigt. In dieser Form kann das Halbzeug in beliebigen Größen gefertigt und angeboten werden, wobei die Fertigung des Halbzeuges auch in einem kontinuierlichen oder semi-kontinuierlichen Herstellungsverfahren möglich ist, womit die Herstellungskosten weiter drastisch gesenkt werden können.

Die Materialbahn mit mäanderförmigem Profil wird in dem erfindungsgemäßen Verfahren als Profilblech, beispielsweise ein Trapezblech, hergestellt. Vorzugsweise handelt es sich hierbei um ein Feinblech mit einer Stärke von weniger als 3 mm. Es kann sich um ein warm oder kalt fertig gewalztes Blech handeln, welches für Umformzwecke zur Herstellung des Profilblechs benutzt wird. Je nach der Stahlsorte können diese Feinbleche auch verzinkt, verzinnt, verkupfert, vernickelt, lackiert, emailliert oder kunststoffbeschichtet oder in sonstiger Weise ausgebildet sein. Derartige Feinbleche können aus Bändern geschnitten werden oder als Coil geliefert werden. Ebenfalls möglich ist die Bereitstellung eines beispielsweise rechteckigen Blechs als Tafel, insbesondere bei Ausbildung als Grobblech mit einer Dicke T ≥ 3,0 mm. Eine Profilgebung für ein derartiges Blech kann durch Tiefziehen, Biegen, Walzprofilieren oder Rundwalzen erfolgen. Zur Erstellung des fertigen Walzwerkprodukts werden Brammen benötigt, die im Blockguss- oder Stranggussverfahren hergestellt sein können. Als Material für die Materialbahn ist hier bspw. St-37, Edelstahl, St-52, Aluminium oder ein Gasfaserverstärkter Kunststoff einsetzbar.

Erfindungsgemäß wird bei dem Halbzeug die Trag- und/oder Dämmschicht auf der der Materialbahn abgewandten Seite stoffschlüssig an eine weitere Materialbahn angebunden, so dass sich ein Aufbau mäanderförmige Materialbahn - Trag- und/oder Dämmschicht - weitere Materialbahn ergibt. Die beiden Materialbahnen können die Trag- und/oder Dämmschicht nach außen schützen, abdichten, isolieren, eine Anbindung weiterer Bauelemente in Folge einer erhöhten Festigkeit oder Steifigkeit ermöglichen, bei der Fertigung der Trag- und/oder Dämmschicht Begrenzungen einer flüssigen oder pastösen, aufschäumenden oder nicht aufschäumenden Masse (bspw. Epoxydharz, Silikon Bitumen oder EPDM) bilden, zu einer Erhöhung des Flächenträgheitsmoments dienen und ähnliches.

In Folge der Begrenzung der Strömungskanäle durch die Grundschenkel sowie Seitenschenkel der Materialbahn mit mäanderförmigem Profil sind diese zunächst lediglich nach unten sowie seitlich oder teilweise begrenzt. Gemäß der Erfindung ist allerdings der Materialbahn nach außen eine weitere Materialbahn vorgeordnet, die ebenfalls ein mäanderförmiges Profil besitzt. Die Strömungskanäle sind zwischen den beiden Materialbahnen ausgebildet. Möglich ist, dass die weitere Materialbahn durchlässig für die Sonnenstrahlen ausgebildet ist, so dass diese in die Strömungskanäle eintreten können, dort das Fluid erwärmen, wobei es von Vorteil ist, wenn dann die untere Materialbahn geeignet eingefärbt oder beschichtet ist, dass diese ein hohes Absorptionsvermögen besitzt. Ebenfalls möglich ist, dass das Fluid geeignet eingefärbt ist zur Erhöhung des Absorptionsvermögens. Durchaus denkbar ist allerdings auch, dass die äußere, weitere Materialbahn nur teilweise oder überhaupt nicht lichtdurchlässig ist, sondern absorbierend ausgebildet ist, so dass diese durch die Sonnenstrahlen erwärmt wird mit einem Übertritt der Wärme von der weiteren Materialbahn zu dem entlang der Materialbahn strömenden Fluid.

Erfindungsgemäß erfolgt zunächst eine kontinuierliche Bereitstellung von Materialbahnen. Eine derartige kontinuierliche Bereitstellung erfolgt beispielsweise über kontinuierliche Herstellungsprozesse für die beiden Materialbahnen, im Anschluss derer dann unmittelbar die weitere Verarbeitung zur Herstellung von Halbzeugen für den Solarkollektor erfolgt. Unter einer kontinuierlichen Bereitstellung wird aber auch verstanden, wenn die Materialien von einer Rolle oder einem Coil, beispielsweise in Form eines Feinbleches, bereitgestellt oder abgezogen werden. Mindestens zwei der Materialbahnen wird in einem Verfahrensschritt umgeformt zu einem mäanderförmigen Profil, welches dann die Grundschenkel und nach außen divergierende Seitenschenkel besitzt. Zwei Materialbahnen werden kontinuierlich gefördert, wobei diese in einem Förderbereich einen Abstand derart besitzen, dass zwischen den beiden Materialbahnen ein Zwischenraum gebildet und vorgegeben ist. Erfindungsgemäß wird eine flüssige, dickflüssige oder pastöse Masse eines Trag- und/oder Dämmmaterials in den Zwischenraum zwischen den beiden Materialbahnen eingebracht, was beispielsweise durch Aufbringen der Masse von oben auf eine untere Materialbahn erfolgen kann, wenn die Materialbahnen noch einen größeren Abstand besitzen, oder durch Einbringen der Masse quer zur Förderrichtung der Materialbahnen erfolgen kann. Es wird dann ein Kontakt und eine Verbindung zwischen der Masse und den beiden Materialbahnen hergestellt, was auf beliebige Weise erfolgen kann. Beispielsweise kann eine Verringerung des Abstandes der Materialbahnen dazu genutzt werden, dass sich die obere Materialbahn an die Masse von oben anlegt, wobei mit weiterer Verringerung sogar ein gewisses Komprimieren der Masse von oben erfolgen kann. Ebenfalls möglich ist, dass die Masse, beispielsweise ein Kunststoff, Polyurethan oder ähnliches, mit einem Treibmittel versehen ist oder wird, was dazu führt, dass eine den Zwischenraum zunächst lediglich teilweise ausfüllende Masse aufschäumt und die Erstreckung in Höhenrichtung vergrößert, bis diese zur Anlage an die obere Materialbahn kommt. Überlagerungen der beiden vorgenannten Effekte sind ebenfalls möglich. Im Anschluss hieran erfolgt ein Aushärten der Masse, womit dann eine feste Verbindung zwischen den Materialbahnen über die Masse geschaffen ist. Das genannte Verfahren wird kontinuierlich durchgeführt. Nach dem Aushärten der Masse erfolgt dann ein Ablängen der Materialbahnen mit dem dazwischen angeordneten, inzwischen ausgehärteten Trag- und/oder Dämmmaterial. Möglich ist, dass die Verfahrensschritte in der genannten Reihenfolge ausgeführt werden, wobei auch durchaus eine abweichende Reihenfolge der Durchführung der Verfahrensschritte möglich ist. So kann beispielsweise das Aufbringen der Masse des Trag- und/oder Dämmmaterials auf eine Materialbahn erfolgen, bevor die beiden Materialbahnen unter Bildung des Zwischenraumes einen vorgegebenen Abstand besitzen.

Das mit dem erfindungsgemäßen Verfahren erzeugte Halbzeug oder der Solarkollektor soll eine weitere Materialbahn besitzen, die kontinuierlich zugeführt wird mit gemeinsamer Ablängung nach Fertigstellen des Halbzeugs. Die weitere Materialbahn kann ebenfalls in einem kontinuierlichen Umformprozess zu einem mäanderförmigen Profil umgeformt werden, welches dann wie erläutert Grundschenkel und nach außen divergierende Seitenschenkel besitzen kann. Die Materialbahn mit mäanderförmigem Profil, an die die Trag- und/oder Dämmschicht stoffschlüssig angebunden ist, sowie die weitere Materialbahn mit mäanderförmigem Profil werden dann anschließend, ebenfalls in einem kontinuierlichen Prozess, miteinander verbunden, wobei zwischen den beiden mäanderförmigen Profilblechen Kanäle ausgebildet sind, in denen dann ein Fluid des Solarkollektors aufgenommen und geführt werden kann. In diesem Fall erfolgt dann ein gemeinsames Ablängen der unterschiedlichen Materialbahnen und der Trag- und/oder Dämmschicht.

In weiterer Ausgestaltung des erfindungsgemäßen Verfahrens wird als Materialbahn ein Blech verwendet, wobei dieses beispielsweise ein Feinblech ist, welches von einem Coil entnommen wird und in einem anschließenden Umformprozess zu einem Profilblech umgewandelt wird, beispielsweise einem Trapezblech.

Entsprechend kann in einem kontinuierlichen Verfahren auch eine transparente Materialbahn zugeführt werden, die dann mit der weiteren Materialbahn im Bereich von Deckschenkeln verbunden wird. Für das fertiggestellte Halbzeug oder den fertigen Solarkollektor ist die weitere Materialbahn mit der transparenten Materialbahn abgedeckt, womit sich ein Schutz nach außen ergeben kann, zwischen transparenter Materialbahn und weiterer Materialbahn ein isolierender Hohlraum gebildet sein kann und/oder zwischen transparenter Materialbahn und erster Materialbahn Strömungskanäle für das Fluid des Solarkollektors geschaffen sein können.

Möglich ist, dass in einem kontinuierlichen oder diskontinuierlichen Verfahrensschritt nach dem Ablängen eine Stirnseite des Halbzeugs mit einem Anschlusselement versehen wird, was beispielsweise mit dem zuvor erläuterten Eintauchverfahren erfolgen kann.

Vorzugsweise ist das erfindungsgemäße Halbzeug durch ein Ablängen auf ein erforderliches Maß gebracht. Bspw. möglich ist, dass durch das Ablängen bereits ein paneelartiges Halbzeug mit einem vorgegebenen Standardmaß, beispielsweise 3 m x 1 m, erzeugt wird, in welchem dann das Halbzeug vertrieben wird. Durch erneutes Ablängen kann dann von einem Abnehmer das Halbzeug an die erforderliche Größe zur Bildung des Solarkollektors angepasst werden.

In weiterer Ausgestaltung der Erfindung kann die weitere Materialbahn im Bereich von Deckschenkeln des mäanderförmigen Profils mit einer transparenten Platte oder Folie, insbesondere aus PC, PMMA, PET oder PE, abgedeckt werden. Möglich ist, dass zwischen der Platte oder Folie sowie der weiteren Materialbahn weitere abgedichtete Hohlräume, Kanäle oder ähnliches gebildet, die letztendlich zu einer verbesserten Isolation des Solarkollektors nach außen, der Vermeidung einer Abfuhr der gesammelten Wärme nach außen und einem verbesserten Wirkungsgrad des Solarkollektors führen.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt in schematischer Darstellung ein in einem Solarkollektor eingesetztes erfindungsgemäß hergestelltes Halbzeug als Teil einer Solaranlage.
- **Fig. 2**: zeigt einen Solarkollektor mit Strömungskanälen in einer schematischen Draufsicht.
- **Fig. 3**: zeigt ein nicht erfindungsgemäß hergestelltes Halbzeug für einen Solarkollektor.
- **Fig. 4**: zeigt ein Ausführungsbeispiel eines erfindungsgemäß hergestellten Halbzeugs für einen Solarkollektor.
- **Fig. 5**: zeigt ein nicht erfindungsgemäß hergestelltes Halbzeug für einen Solarkollektor.
- **Fig. 6**: zeigt ein zweites Ausführungsbeispiel eines erfindungsgemäß hergestellten Halbzeugs für einen Solarkollektor.
- **Fig. 7**: zeigt schematisch ein erfindungsgemäßes Verfahren zur kontinuierlichen Herstellung eines Halbzeugs.
- **Fig. 8**: zeigt schematisch ein Anschlusselement in Wirkverbindung mit einem erfindungsgemäß hergestellten Halbzeug in vereinfachter Darstellung.
- **Fig. 9**: zeigt schematisch die Verbindung eines erfindungsgemäß hergestellten Halbzeugs mit einem Anschlusselement in einem Eintauchverfahren.

### FIGURENBESCHREIBUNG

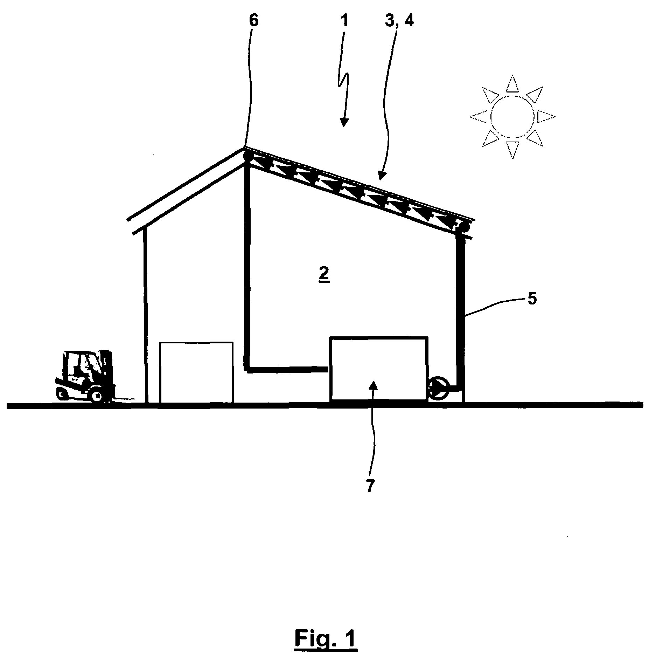

**Fig. 1** zeigt ein beispielsweise industrielles Gebäude 1 mit einem Innenraum 2, welcher ohne Zwischenschaltung einer Gehäusewand oder eines Daches, von Dachlatten oder ähnliches freitragend von einem mit einem erfindungsgemäß hergestellten Halbzeug 3 gebildeten

Solarkollektor 4 begrenzt ist. Der Solarkollektor 4 stützt sich vorzugsweise lediglich mit seinen Stirnseiten an einer Gebäudewand 5 sowie am Dachfirst 6 ab sowie mit seinen Seiten an weiteren benachbarten Dachelementen, benachbarten Solarkollektoren und/oder der Gebäudewand 5. Der Solarkollektor 4 ist Teil einer Solaranlage 7, in welcher ein Fluid zirkuliert und im Bereich des Solarkollektors 4 durch die Sonne erwärmt wird. Die Solaranlage 7 dient insbesondere der Erwärmung von Trink- oder Brauchwasser, dem Betrieb oder der Unterstützung eines Heizsystems, im Industriebereich für Nieder- und Mitteltemperaturanwendungen und ähnliches.

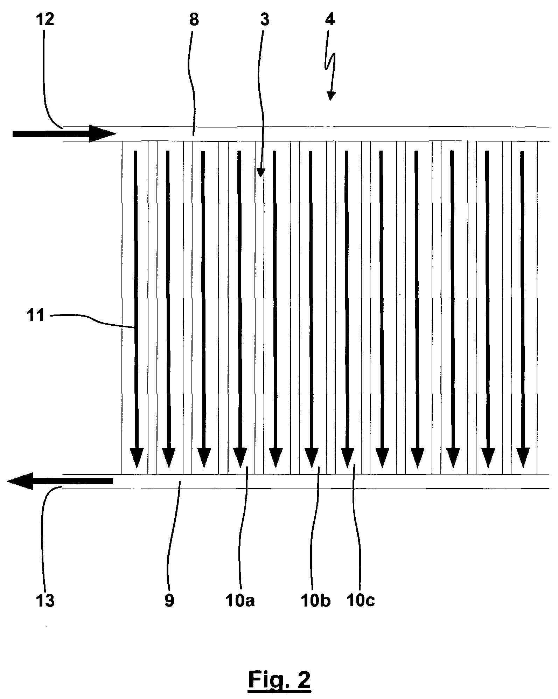

**Fig. 2** zeigt einen Solarkollektor 4 in einer Draufsicht. Der Solarkollektor 4 verfügt oder besteht im Wesentlichen aus dem Halbzeug 3, welches sich in der Zeichenebene erstreckt, und auf gegenüberliegenden Stirnseiten angeordneten Anschlusselementen 8, 9. In dem Halbzeug 3 sind parallel orientierte Strömungskanäle 10a, 10b, 10c, ... gebildet, die in Fig. 2 von oben nach unten in die Strömungsrichtung 11 von dem Fluid durchströmt werden. Das Anschlusselement 8 besitzt einen Einlass 12, über welchem dem Solarkollektor 4 das Fluid zugeführt wird, welches die Strömungskanäle 10 durchströmt. Entsprechend besitzt das Anschlusselement 9 einen Auslass 13, über welchen das den Solarkollektor 4 durchströmende und erwärmte Fluid abgeführt wird für eine Nutzung der Wärme abseits des Solarkollektors 4 in der Solaranlage 7. Der Übertritt des Fluids erfolgt im Bereich des Anschlusselements 8 von dem Einlass 12 über eine Verbindungsleitung 31 unter Verzweigung zu den Strömungskanälen 10, während im Bereich des Anschlusselements 9 die Strömungskanäle 10 über eine entsprechende Verbindungsleitung 31 zusammengeführt werden, die dann mit dem Auslass 13 fluidisch gekoppelt ist.

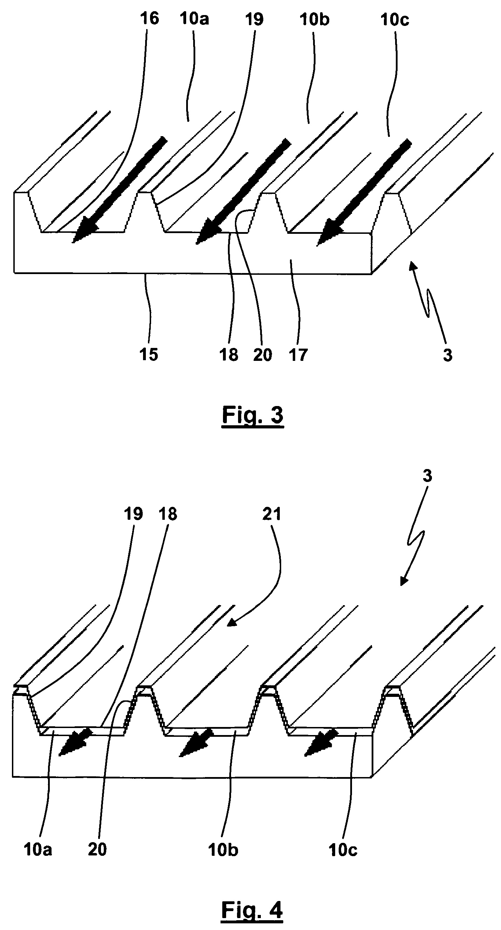

**Fig. 3** zeigt ein nicht erfindungsgemäß hergestelltes Halbzeug 3. Hier ist zwischen einer ebenen unteren Materialbahn 15, vorzugsweise einem Blech, und einer oberen mäanderförmigen oder trapezförmigen Materialbahn 16, vorzugsweise ein Trapezblech, ein Trag- und/oder Dämmmaterial 17 zwischengeordnet. Dieses ist stoffschlüssig an die Materialbahnen 15, 16 angebunden, vorzugsweise an diese angespritzt.

Die obere Materialbahn 16 bildet die Strömungskanäle 10 aus, die nach unten begrenzt sind durch Grundschenkel 18 der mäanderförmigen Materialbahn 16 sowie seitlich begrenzt sind durch Seitenschenkel 19, 20 der Materialbahn 16. Für das in Fig. 3 dargestellte Ausführungsbeispiel sind die Strömungskanäle 10 nach oben offen.

Das erfindungsgemäß hergestellte Halbzeug gemäß **Fig. 4** ist zunächst entsprechend der Ausführungsform gemäß Fig. 3 ausgebildet. Allerdings ist für dieses Ausführungsbeispiel eine weitere Materialbahn 21 vorgesehen, die ebenfalls mäanderförmig geformt ist, beispielsweise als Trapezblech. Die Profilierung der weiteren Materialbahn 21 entspricht im Wesentlichen der der Materialbahn 16. Somit besitzt die weitere Materialbahn 21 ebenfalls Grundschenkel 18 sowie Seitenschenkel 19, 20. Die weitere Materialbahn 21 ist so von oben auf die Materialbahn 16 aufgesetzt, dass die Grundschenkel 18 und ein Teilbereich der Seitenschenkel 19, 20 der weiteren Materialbahn 21 eintreten in die Strömungskanäle 10 der Materialbahn 19 und diese nach oben verschließen. Für das Ausführungsbeispiel gemäß Fig. 4 sind somit die Strömungskanäle in Umfangsrichtung begrenzt durch die Grundschenkel 18 sowie Seitenschenkel 19, 20 der Materialbahn 16 sowie zumindest durch den Grundschenkel 18 der weiteren Materialbahn 21. Die Seitenschenkel 19, 20 der Materialbahn 21 kommen unter Abdichtung zur Anlage an die Seitenschenkel 19, 20 der Materialbahn 16 und sind hier insbesondere stoffschlüssig angebunden. Es versteht sich, dass die weitere Materialbahn 21 mehr oder weniger abweichend hinsichtlich ihrer Profilgebung ausgebildet sein kann. Beispielsweise kann der Grundschenkel 18 der weiteren Materialbahn 21 eine größere Erstreckung im Querschnitt besitzen als der Grundschenkel 18 der Materialbahn 16, wobei die Differenz der Abmessungen die Höhe des sich ergebenden Strömungskanals vorgibt. Entsprechendes gilt für die Längen der Seitenschenkel 19, 20.

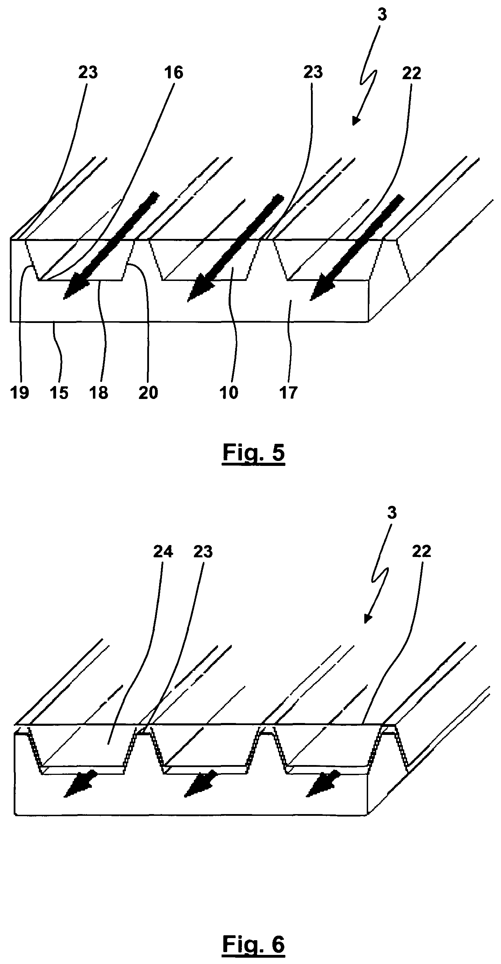

Die weitere nicht erfindungsgemäß hergestellte Ausführungsform gemäß **Fig. 5** entspricht zunächst der in Fig. 3 dargestellten Ausführungsform. Zusätzlich ist aber eine transparente Folie oder Platte 22, die eine weitere Materialbahn sein kann, von oben auf die obere Materialbahn 16 aufgelegt und mit dieser verbunden, beispielsweise stoffschlüssig. Dies hat zur Folge, dass für das Ausführungsbeispiel gemäß Fig. 5 die Strömungskanäle 10 durch die Folie oder Platte 22 nach oben begrenzt sind, so dass der Querschnitt der Strömungskanäle 10 vorgegeben und begrenzt wird durch die Grundschenkel 18, Seitenschenkel 19, 20 sowie die Folie oder Platte 22. Zwischen Seitenschenkeln 19, 20 benachbarter Strömungskanäle 10 bildet die obere Materialbahn 16 Deckschenkel 23 aus, an welchem die Folie der Platte 22 zur Anlage kommt und im Bereich welcher die Verbindung, beispielsweise das stoffschlüssige Anbinden, erfolgt. Die Deckschenkel 23 sind parallel zu den Grundschenkeln 18 orientiert, besitzen aber eine wesentlich geringere Erstreckung quer zu der Längsachse der Strömungskanäle 10 als diese.

Bei dem in **Fig. 6** dargestellten erfindungsgemäß hergestellten Ausführungsbeispiel sind die Bauelemente des Ausführungsbeispiels gemäß Fig. 4 ebenfalls mit einer zusätzlichen Folie oder Platte 22 versehen, die sich in diesem Fall an Deckschenkeln 23 der weiteren Materialbahn 21 abstützt und hier mit dieser verbunden ist, beispielsweise stoffschlüssig. Zwischen der Folie oder Platte 22 und der weiteren Materialbahn 21 sind in diesem Fall Hohlkammern 24 gebildet, die zu einer verbesserten Isolation führen.

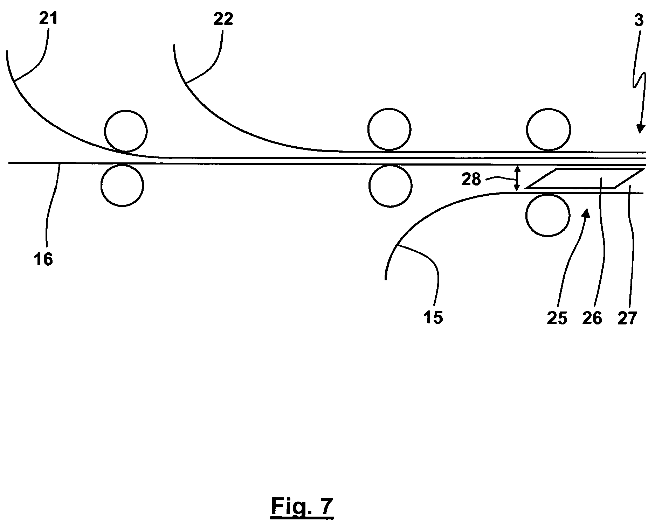

**Fig. 7** zeigt einen kontinuierlichen Herstellungsprozess für ein Halbzeug 3. Das Verfahren verfügt über die folgenden optionalen, kumulativen oder alternativen Verfahrensschritte:
- Kontinuierlich wird dem Prozess die untere Matetrialbahn 15 zugeführt. Diese entstammt unmittelbar einem kontinuierlichen Herstellungsprozess für die Materialbahn 15 oder einer Rolle oder einem Coil. Die Materialbahn 15 kann dem Prozess unprofiliert oder mit einem mäanderförmigen Profil zugeführt werden, wobei der Prozess selber auch einen entsprechenden Umformvorgang zur Umformung der Materialbahn 15 beinhalten kann.
- Weiterhin wird dem Prozess die obere Materialbahn 16 kontinuierlich zugeführt. Diese kann ebenfalls einem kontinuierlichen Herstellungsprozess entstammen oder von einer Rolle oder einem Coil kontinuierlich entnommen werden. Teil des Prozesses kann eine Erstellung der mäanderförmigen Profilgebung sein. In dem dargestellten Prozessbereich ist die vereinfacht dargestellte Materialbahn 16 bereits profiliert.
- In einem Einbringbereich 25 wird kontinuierlich eine Masse 26 des Trag- und/oder Dämmmaterials 17 in flüssigem oder pastösem Zustand in einen Zwischenraum 27 eingeführt, der sich in Folge des Abstands 28 der Materialbahnen 15, 16 im Einbringbereich 25 ergibt.
- Die Masse 26 wird in Kontakt und Verbindung sowohl mit der Materialbahn 15 als auch mit der Materialbahn 16 gebracht, was durch Verringerung des Abstands 28 stromabwärts in Förderrichtung, weiteres Einbringen und/oder Aufschäumen der Masse 26 erfolgen kann. Nach einem in Fig. 7 nicht dargestellten Ablängen in einer Ablängstation sind Halbzeuge 3 gemäß der Ausführungsform, die in Fig. 3 dargestellt ist, hergestellt.
- Soll hingegen in einem kontinuierlichen Fertigungsprozess eine Ausführungsform des Halbzeugs 3 gemäß Fig. 4 gefertigt werden, so ist es erforderlich, dass dem Prozess kontinuierlich die weitere Materialbahn 21 zugeführt wird, was entsprechend über einen kontinuierlichen Herstellungsprozess oder die Entnahme von einer Rolle oder einem Coil erfolgen kann. Die Grundschenkel 18 der weiteren Materialbahn 21 treten dann mit fortschreitender Förderung immer weiter in die Strömungskanäle 10 der Materialbahn 16 ein. In einer nicht dargestellten Verbindungsstation kann die Verbindung der Materialbahnen 16, 21 im Bereich der Seitenschenkel 19, 20 derselben vorbereitet oder durchgeführt werden. Um lediglich einige Beispiele für eine derartige Verbindungsvorbereitung oder Herstellung zu nennen, kann ein Auftragen eines adhäsiven Mittels auf die Oberseite der Seitenschenkel 19, 20 der Materialbahn 16 erfolgen mit anschließendem Anpressen der Unterseiten der Seitenschenkel 19, 20 der Materialbahn 21. Ebenfalls möglich ist ein Punktschweißen, über welches die Seitenschenkel 10, 20 der Materialbahnen 16, 21 miteinander verbunden oder geheftet werden.
- Soll hingegen die Fertigung einer Ausführungsform gemäß Fig. 6 erfolgen, muss, ebenfalls kontinuierlich, dem Prozess die Folie oder Platte 22 auf entsprechende Weise zugeführt werden. In dem Prozess wird die Folie oder Platte 22 zunehmend den Deckschenkeln 23 der weiteren Materialbahn 21 angenähert und mit diesen im Bereich einer Verbindungsstation verbunden, beispielsweise ebenfalls durch Auftrag eines adhäsiven Mittels auf die Oberseite der Deckschenkel 23 der Materialbahn 21 und/oder die Unterseite der Folie oder Platte 22, ein Verschweißen oder Heften oder die Ausbildung der Folie oder Platte 22 als selbstklebend.
- Soll hingegen eine Ausführungsform des Halbzeugs gemäß Fig. 5 gefertigt werden, erfolgt keine Zufuhr der weiteren Materialbahn 21. In diesem Fall wird die Folie oder Platte 22 an die Deckschenkel 23 der Materialbahn 13 angenähert und mit diesen verbunden.

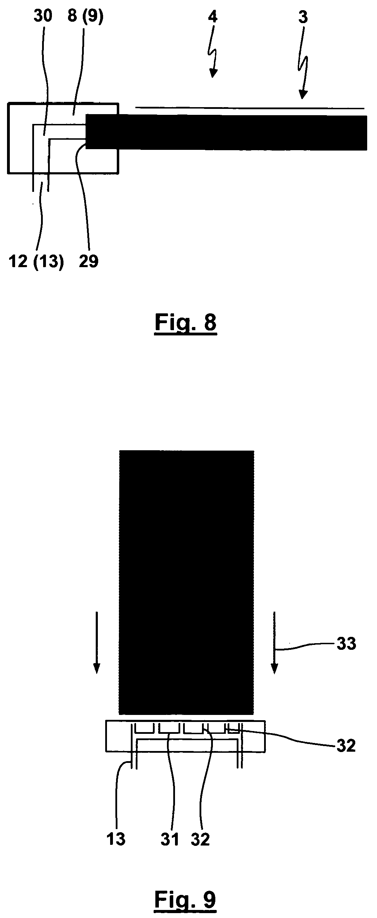

**Fig. 8** zeigt die Verbindung zwischen einem Halbzeug 3 und einem Anschlusselement 8 bzw. 9 im Bereich einer Stirnseite 29 des Halbzeugs 3. Das Anschlusselement 8 besitzt einen innen liegenden Kanal 30, der in diesem Fall nach unten abgewinkelt ist und in den Einlass 12 oder Auslass 13 mündet. Auf diese Weise ist mindestens ein Strömungskanal 10 des Halbzeugs 3 mit dem Einlass 12 oder Auslass 13 verbunden.

Wie aus **Fig. 9** ersichtlich ist, kann ein Auslass 13 (oder entsprechend ein Einlass 12) über eine gemeinsame Verbindungsleitung mit mehreren Stichleitungen 32 verbunden sein, welche dann in die Strömungskanäle 10 des Halbzeugs 3 einmünden.

Das Halbzeug 3 kann als eine Art Sandwich-Dachelement ausgebildet sein, welches im Rahmen von Energieeffizienzmaßnahmen und/oder für die Sanierung, beispielsweise für Produktionshallen, verwendet werden kann. Zur Erhöhung der Absorption von Sonnenstrahlen kann eine der Sonne zugewandte Außenfläche der außen liegenden Materialbahn schwarz lackiert sein, mit einer Spezialbeschichtung zur Erhöhung der Absorptionsvermögens beschichtet sein oder mit einem die Absorption fördernden Material oder einer entsprechenden Farbgebung gefertigt sein. Als Material für die Folie oder Platte 22 kann jedes beliebige transparente oder Teil-transparente Material Einsatz finden, beispielsweise PC, PET oder Glas.

Durch Verwendung von Standardmaterialien, wie beispielsweise Trapezblechen und kostengünstigen Zusatzmaterialen und Bauelementen kann eine drastische Reduktion der Kosten für das Halbzeug 3 bzw. den Solarkollektor 4 erzielt werden. Eine Halbierung der Kosten wird angestrebt. Ist die Sanierung eines Daches mit Sandwich-Dachelementen ohnehin erforderlich, reduzieren sich die Kosten erneut um ca. 50 %. Die erfindungsgemäß hergestellten Halbzeuge und die hiermit gebildeten Solarkollektoren dienen nicht nur der Erwärmung des Wärmeträgerfluides, sondern dämmen gleichzeitig das Gebäude, auf welchem diese installiert sind. Dies führt zusätzlich zur Reduktion des Heizwärmebedarfs. Anders als bei herkömmlichen sogenannten "Aufdach"-Anlagen bildet der Solarkollektor 4 gleichzeitig die Außenhaut und integriert sich somit hervorragend in bestehende Anlagen und Gebäude. In Folge der Vielzahl der Stege, die bedingt ist durch die Bauart in Form von Sandwich-Dachelementen ist es möglich, neben der klassischen Glasabdeckung auch polymere Werkstoffe wie PC, PMMA, PET oder PVDF als Folie oder Platte 22 zu verwenden. Einer eventuell verringerten Lebensdauer ist mit einer vereinfachten Montage und Demontage der Folie oder Platte 22 entgegenzuwirken, so dass die Folie oder Platte 2 nach Ablauf der Lebensdauer problemlos ausgetauscht werden kann. Während übliche Kollektoren als kleine Module (mit 2 bis 6 m²) auf dem Dach miteinander verschachtelt werden, ist das Prinzip des hier vorgeschlagenen Solarkollektors 4 umgekehrt: Das komplette Dach kann mit Solarkollektoren 4 ausgerüstet werden, woraus dann eine gesamte Kollektorfläche resultiert.

Eine Fertigung der mäanderförmigen Profilgebung der Materialbahnen kann unter Einsatz einer Tiefsickenprofilierung erfolgen. Für die Materialbahnen 15, 16, 21 können teilweise oder vollständig Stahlbleche, Kupfer- oder Aluminiumbleche verwendet werden.

Vorzugsweise findet für die obere Materialbahn 16 ein Material Einsatz, welches sich vornehmlich als guter Absorber eignet, beispielsweise ein dünnes Kupferblech mit niedrigen Emissionswerten und guten Wärmeleiteigenschaften. Sind gleiche Wärmeausdehnungskoeffizienten gewünscht, kann die Materialbahn 16 aus einem entsprechenden Material bestehen. Für die Anschlusselemente 8, 9 ist eine leistenartige Ausbildung möglich, wobei ebenfalls die Ausbildung einer Art Rahmenkonstruktion denkbar ist, zwischen denen das Halbzeug 3 oder mehrere nebeneinander angeordnete Halbzeuge 3 angeordnet ist/sind. Der Zu- und Ablauf der Solarkollektoren 4 lässt sich über ein entsprechendes Rohrverteilungssystem auf dem Dachfirst und einem Dachrinnensystem am unteren Ende der Halbzeuge 3 realisieren. Der Solarkollektor 4 wird vorzugsweise drucklos betrieben und ist selbstentleerend ausgebildet. Möglich ist der Einsatz der Solarkollektoren 4 mit einer Durchströmung in Traufe-First-Richtung und umgekehrt. Die Anschlusselemente 8, 9 sind vorzugsweise aus Gießharz, Silikon oder Polypropylen hergestellt.

Die Herstellung der Anschlusselemente 8, 9 kann durch folgende Arbeitsschritte erfolgen:
- Zunächst wird eine Gießform vorbereitet. Die Abmessungen der Gießform sollten derart gewählt werden, dass möglichst wenig Gießmaterial für die Gewährleistung der gewünschten Funktionen erforderlich ist. Weiterhin erscheint es sinnvoll, die Gießform an die gegebene Dachkonstruktion anzupassen. Die Gießform kann aus Einzelteilen gefertigt werden, um eine gute Entfernbarkeit nach dem Gießvorgang zu gewährleisten.
- Anschluss- und Verteilerrohre sowie Paneele 30, Verbindungsleitungen 31 und Stichleitungen 32 müssen durch entsprechende Geometrien innerhalb der Gießform oder durch in die Gießform eingesetzte Rohrstücke vorgegeben werden. Sinnvoll ist eine Durchführung der Anschlüsse normal zur Kollektorebene, wie dies auch in Fig. 8 dargestellt ist.
- Es folgt dann das Befüllen der Gießform mit dem erhitzten und erweichten Werkstoff.

In diesem Zustand kann das Halbzeug 3 vertikal in die Gießform eingebracht werden, wie dies mit der Eintauchrichtung 33 in Fig. 9 angedeutet ist.
- Anschließend erfolgt ein Aushärten des Materials.
- Schließlich erfolgt die Entnahme und Nachbereitung. Die Gießform wird durch Demontage der Formeinzelteile entfernt. Die frei gebliebenen Hohlräume, die als Anschlüsse dienen, können nun mit den erforderlichen Fittings usw. versehen werden.

In einem Solarkollektor, der mit einem Halbzeug gebildet ist, welches mit einem erfindungsgemäßen Verfahren hergestellt ist, können die Fluide zum Sammeln und Abtransportieren der Wärme, die in dem Solärkollektor gesammelt wird, den Strömungskanälen auf beliebige Weise, beispielsweise durch mindestens ein in Längsrichtung des Strömungskanals orientiertes und einmündendes oder in Querrichtung zur Längsachse des Strömungskanals orientiertes und einmündendes Rohr, zugeführt werden. Beliebige rohrnetzwerkartige fluidische Zuführleitungen und Abführleitungen, verzweigende Leitungen oder abgewinkelte Leitungen sind ebenfalls denkbar. Für eine weitere erfindungsgemäße Ausgestaltung ist stirnseitig des Halbzeugs mindestens ein Anschlusselement vorgesehen. Dieses Anschlusselement besitzt eine Verbindungsleitung, in welche mindestens zwei Strömungskanäle einmünden. Vorzugsweise ist ein einziges Anschlusselement geeignet ausgebildet, um sämtliche Strömungskanäle eines Halbzeugs zusammenzuführen, wobei auch möglich ist, dass unterschiedliche Strömungskanäle des Halbzeuges in entgegengesetzte Richtungen durchströmt werden und über eine Verbindungsleitung eines Anschlusselements lediglich strömabwärtige Enden von Strömungskanälen miteinander verbunden werden, während über eine weitere Verbindungsleitung desselben Anschlusselementes oder eines anderen Anschlusselementes stromaufwärtige Enden der Strömungskanäle mit dem Fluid beschickt werden können. Es ist auch möglich, dass an gegenüberliegenden Stirnseiten des Halbzeuges jeweils ein Anschlusselement vorgesehen ist.

Von Vorteil ist weiterhin, wenn in einer weiteren Ausgestaltung das Anschlusselement einen Ein- oder Auslass besitzt, der fluidisch mit der vorgenannten Verbindungsleitung verbunden ist. Über einen derartigen zentralen Ein- oder Auslass, der über die Verbindungsleitung mit mehreren Strömungskanälen verbunden ist, kann eine Anbindung an die Solaranlage erfolgen, womit dann letztendlich der Verrohrungsaufwand reduziert ist und der Bauraum für derartige Verrohrungen minimiert werden kann.

Es gibt vielfältige Verbindungsmöglichkeiten zwischen Anschlusselement und Halbzeug, wobei zu beachten ist, dass die eingesetzte Verbindung fluid- und dampfdicht ausgebildet ist, wozu vorzugsweise eine stoffschlüssige Verbindung, die Zwischenordnung einer Dichtmasse, insbesondere gießbares Epoxydharz oder Silikon, oder von Dichtelementen ratsam ist. Eine besonders einfache Verbindung zwischen Anschlusselement und Halbzeug ergibt sich, wenn das Anschlusselement stoffschlüssig mit dem Halbzeug verbunden ist. Möglich ist hierbei, dass das Anschlusselement unmittelbar an das Halbzeug angebunden oder angespritzt wird, wobei das Anschlusselement beispielsweise aus einem Kunststoff bestehen kann. Möglich ist auch, dass ein Rohrleitungssystem, ggf. mit einer Verbindungsleitung, Mündungsleitungen für die Strömungskanäle und einem Ein- und/oder Auslass in einer Form angeordnet wird, ein verflüssigtes Material des Anschlusselementes in diese Form eingefüllt wird, ohne dass das verflüssigte Material in das Rohrleitungssystem eintreten kann und dann die Stirnseite des Halbzeugs in das verflüssigte Material in der Form eingetaucht wird. Nach Aushärten des verflüssigten Materials ist auf einfache Weise eine feste und dichte Verbindung geschaffen, unabhängig von einer Form und komplexen Kontur des Halbzeugs.

Die Verbindung der Materialbahnen 16, 21 miteinander oder die Anbindung der Folie oder Platte 22 an die Deckschenkel 23 der Materialbahn 21 oder 21 kann bspw. durch eine linienförmige Ausstattung mit Klebestreifen, EPDM-Dichtlippen oder Silikon erfolgen.

**BEZUGSZEICHENLISTE**

| | | | |
|---|---|---|---|
| 1 | Gebäude | 31 | Verbindungsleitung |
| 2 | Innenraum | 32 | Stichleitung |
| 3 | Halbzeug | 33 | Eintauchrichtung |
| 4 | Solarkollektor | | |
| 5 | Gebäudewand | | |
| 6 | Dachfirst | | |
| 7 | Solaranlage | | |
| 8 | Anschlusselement | | |
| 9 | Anschlusselement | | |
| 10 | Strömungskanal | | |
| 11 | Strömungsrichtung | | |
| 12 | Einlass | | |
| 13 | Auslass | | |
| | | | |
| 15 | Materialbahn | | |
| 16 | Materialbahn | | |
| 17 | Trag- und/oder Dämmmaterial | | |
| 18 | Grundschenkel | | |
| 19 | Seitenschenkel | | |
| 20 | Seitenschenkel | | |
| 21 | Materialbahn | | |
| 22 | Folie oder Platte | | |
| 23 | Deckschenkel | | |
| 24 | Hohlkammer | | |
| 25 | Einbringbereich | | |
| 26 | Masse | | |
| 27 | Zwischenraum | | |
| 28 | Abstand | | |
| 29 | Stirnseite | | |
| 30 | Kanal | | |

## Patentansprüche

1. Verfahren zur Herstellung von Halbzeugen (3) für einen Solarkollektor (4), **mit folgenden Verfahrensschritten:**
a) kontinuierliche Bereitstellung von mindestens drei Materialbahnen (15, 16, 21),
b) Umformung von mindestens zwei Materialbahnen (16, 21) zu einem mäanderförmigen Profil mit Grundschenkeln (18) und nach außen divergierenden Seitenschenkeln (19, 20),
c) kontinuierliches Fördern von zwei Materialbahnen (15, 16) mit einem Abstand (28) derart, dass zwischen den beiden Materialbahnen (15, 16) ein Zwischenraum (27) gebildet ist,
d) Einbringen einer Masse (26) eines Trag- und/oder Dämmmaterials (17) in den Zwischenraum (27),
e) Herstellung eines Kontakts und einer Verbindung zwischen der Masse (26) und den Materialbahnen (15, 16),
f) Aushärten der Masse (26),
g) wobei die Materialbahn (16) mit mäanderförmigem Profil, an welche die Trag-- und/oder Dämmschicht (17) stoffschlüssig angebunden wird, sowie die weitere Materialbahn (21) mit mäanderförmigem Profil miteinander verbunden werden und zwischen den beiden mäanderförmigen Materialbahnen (16, 21) Strömungskanäle (10) ausgebildet sind, in denen ein Fluid des Solarkollektors (4) aufgenommen und geführt werden kann,
**dadurch gekennzeichnet, dass**
h) die weitere Materialbahn (21) so von oben auf die Materialbahn (16) aufgesetzt wird, dass die Grundschenkel (18) und ein Teilbereich der Seitenschenkel (19, 20) der weiteren Materialbahn (21) in Strömungskanäle (10), die von der Materialbahn (16) gebildet sind, eintreten, so dass Strömungskanäle (10a, 10b, 10c) in Umfangsrichtung begrenzt sind durch Grundschenkel (18) sowie Seitenschenkel (19, 20) der Materialbahn (16) sowie zumindest durch den Grundschenkel (18) der weiteren Materialbahn (21), wobei Seitenschenkel (19, 20) der Materialbahn (21) unter Abdichtung zur Anlage kommen an Seitenschenkeln (19, 20) der Materialbahn (16).

2. Verfahren nach Anspruch 1, **dadurch gekennzeichnet, dass** das Verfahren kontinuierlich durchgeführt wird und die Materialbahnen (15, 16) und die ausgehärtete Masse (26) gemeinsam abgelängt werden.

3. Verfahren nach Anspruch 1 oder 2, **dadurch gekennzeichnet, dass** mindestens eine Materialbahn (15, 16) ein Blech ist.

4. Verfahren nach Anspruch 2 oder 3, **dadurch gekennzeichnet, dass** das kontinuierliche Bereitstellen mindestens einer Materialbahn (15, 16) von einem Coil erfolgt.

5. Verfahren nach einem der Ansprüche 1 bis 4, **dadurch gekennzeichnet, dass** die Herstellung eines Kontakts zwischen der Masse (26) und den Materialbahnen (15, 16) mit einem Aufschäumen der Masse (26) erfolgt.

6. Verfahren nach einem der Ansprüche 1 bis 5, **dadurch gekennzeichnet, dass** in dem kontinuierlichen Verfahren
a) eine transparente Materialbahn als Folie oder Platte (22) zugeführt wird und
b) die transparente Materialbahn derart mit der weiteren Materialbahn (21) im Bereich von Deckschenkeln (23) verbunden wird, dass die weitere Materialbahn (21) mit der transparenten Materialbahn abgedeckt ist.

7. Verfahren nach einem der Ansprüche 1 bis 6, **dadurch gekennzeichnet, dass** nach dem Ablängen eine sich durch das Ablängen ergebende Stirnseite (29) mit einem Anschlusselement (8, 9) versehen wird.

8. Verfahren nach einem der Ansprüche 1 bis 7, **dadurch gekennzeichnet, dass** das Halbzeug (3) mit einer Steifigkeit ausgestattet wird, die ausreichend ist, dass der Solarkollektor (4) als selbsttragende Gebäudewand oder Dach einsetzbar ist.

9. Verfahren nach einem der Ansprüche 1 bis 8, **dadurch gekennzeichnet, dass** die Trag- und/oder Dämmschicht (17) auf der der Materialbahn (16) abgewandten Seite stoffschlüssig an eine weitere Materialbahn (15) angebunden wird.

10. Verfahren nach einem der Ansprüche 1 bis 9, **dadurch gekennzeichnet, dass** die weitere Materialbahn (21) im Bereich von Deckschenkeln (23) mit einer transparenten Platte oder Folie (22) abgedeckt ist.

## Claims

1. Method for manufacturing semi-finished parts (3) for a solar collector (4) **with the following steps:**
a) continuous supply of at least three sheets of material (15, 16, 21),
b) forming of at least two sheets of material (16, 21) into a meander-shaped profile with base legs (18) and side legs (19, 20) diverging to the outside,
c) continuous conveying of two sheets of material (15, 16) with a distance (28) in such a way that between the two sheets of material (15, 16) a space (27) is formed,
d) inserting a mass (26) of a supporting and/or insulating material (17) into the space (27),
e) establishing a contact and a connection between the mass (26) and the sheets of material (15, 16),
f) hardening of the mass (26),
g) where the sheet of material (16) with the meander-shaped profile, to which the supporting and/or insulating layer (17) is materially bonded, and the further sheet of material (21) with the meander-shaped profile are connected to each other and between the two meander-shaped sheets of material (16, 21) flow channels (10) are formed, in which a fluid of the solar collector (4) can be accommodated and guided,
**characterised in that**
h) the further sheet of material (21) is set upon the sheet of material (16) from above in such a way that the base legs (18) and a part of the side legs (19, 20) of the further sheet of material (21) enter into flow channels (10) formed by the sheet of material (16) so that the flow channels (10a, 10b, 10c) in a circumferential direction are limited by base legs (18) and side legs (19, 20) of the sheet of material (16) and at least by the base leg (18) of the further sheet of material (21), where side legs (19, 20) of the sheet of material (21) sealingly rest against side legs (19, 20) of the sheet of material (16).

2. Method according to claim 1, **characterised in that** the method is executed continuously and the sheets of material (15, 16) and the hardened mass (26) are together cut to length.

3. Method according to claim 1 or claim 2, **characterised in that** at least one sheet of material (15, 16) is a sheet metal plate.

4. Method according to claim 2 or 3, **characterised in that** the at least one sheet of material (15, 16) is continuously supplied from a coil.

5. Method according to one of the claims 1 to 4, **characterised in that** establishing a contact between the mass (26) and the sheets of material (15, 16) is effected with a foaming of the mass (26).

6. Method according to one of the claims 1 to 5, **characterised in that** in the continuous method
a) a transparent sheet of material is supplied as a film or as a plate (22) and that
b) the transparent sheet of material is connected to the further sheet of material (21) in the region of cover legs (23) in such a way that the further sheet of material (21) is covered by the transparent sheet of material.

7. Method according to one of the claims 1 to 6, **characterised in that** after the cutting to length a face side (29) resulting from the cutting to length is provided with a connecting element (8, 9).

8. Method according to one of the claims 1 to 7, **characterised in that** the semi-finished part (3) is provided with a stiffness which is sufficient to employ the solar collector (4) as a self-supporting wall of a building or as a roof.

9. Method according to one of the claims 1 to 8, **characterised in that** the supporting and/or insulating layer (17) is materially bonded to a further sheet of material (15) on the side facing away from the sheet of material (16).

10. Method according to one of the claims 1 to 9, **characterised in that** the further sheet of material (21) in the region of cover legs (23) is covered with a transparent plate or film (22).

## Revendications

1. Procédé de production de demi-produits (3) conçus pour un capteur solaire (4), avec les **étapes de procédé suivantes:**
a) fourniture continue d'au moins trois bandes de matériau (15, 16, 21),
b) façonnage d'au moins deux bandes de matériau (16, 21) en un profilé sinueux avec des branches de base (18) et des branches latérales (19, 20) divergeant vers l'extérieur,
c) transport continu de deux bandes de matériau (15, 16) avec un écart (28) de telle sorte qu'un espace intermédiaire (27) est formé entre les deux bandes de matériau (15, 16),
d) introduction d'une masse (26) d'un matériau porteur et/ou isolant (17) dans l'espace intermédiaire (27),
e) production d'un contact et d'un raccordement entre la masse (26) et les bandes de matériau (15, 16),
f) durcissement de la masse (26),
g) la bande de matériau (16) avec le profilé sinueux à laquelle la couche porteuse et/ou isolante (17) se rattache par liaison de matière, ainsi que l'autre bande de matériau (21) avec un profilé sinueux étant raccordées l'une à l'autre, et des canaux d'écoulement (10) étant constitués entre les deux bandes de matériau (16, 21) sinueuses, dans lesquels un fluide du capteur solaire (4) peut être reçu et guidé,
**caractérisé en ce que**
h) l'autre bande de matériau (21) est placée par le haut sur la bande de matériau (16) de telle sorte que les branches de base (18) et une zone partielle des branches latérales (19, 20) de l'autre bande de matériau (21) entrent dans des canaux d'écoulement (10) qui sont formés par la bande de matériau (16) de telle sorte que des canaux d'écoulement (10a, 10b, 10c) sont limités dans la direction circonférentielle par des branches de base (18) ainsi que par des branches latérales (19, 20) de la bande de matériau (16) ainsi qu'au moins par la branche de base (18) de l'autre bande de matériau (21), des branches latérales (19, 20) de la bande de matériau (21) venant en appui de façon étanche contre des branches latérales (19, 20) de la bande de matériau (16).

2. Procédé selon la revendication 1, **caractérisé en ce que** le procédé est réalisé en continu et **en ce que** les bandes de matériau (15, 16) et la masse (26) durcie sont coupées à longueur conjointement.

3. Procédé selon la revendication 1 ou 2, **caractérisé en ce qu'**au moins une bande de matériau (15, 16) est une tôle.

4. Procédé selon la revendication 2 ou 3, **caractérisé en ce que** la fourniture continue d'au moins une bande de matériau (15, 16) s'effectue à partir d'une bobine.

5. Procédé selon l'une des revendications 1 à 4, **caractérisé en ce que** la production d'un contact entre la masse (26) et les bandes de matériau (15, 16) s'effectue avec un moussage de la masse (26).

6. Procédé selon l'une des revendications 1 à 5, **caractérisé en ce que**, dans le procédé continu,
a) une bande de matériau transparente est acheminée en tant que feuille ou plaque (22), et
b) la bande de matériau transparente est raccordée à l'autre bande de matériau (21) dans la zone de branches de couverture (23) de telle sorte que l'autre bande de matériau (21) est recouverte par la bande de matériau transparente.

7. Procédé selon l'une des revendications 1 à 6, **caractérisé en ce que**, après la coupe à longueur, un côté frontal (29) résultant de la coupe à longueur est muni d'un élément de jonction (8, 9).

8. Procédé selon l'une des revendications 1 à 7, **caractérisé en ce que** le demi-produit (3) est doté d'une rigidité qui est suffisante pour que le capteur solaire (4) puisse être mis en oeuvre en tant que paroi de construction autoporteuse ou toit.

9. Procédé selon l'une des revendications 1 à 8, **caractérisé en ce que** la couche porteuse et/ou isolante (17) est rattachée par liaison de matière à une autre bande de matériau (15) sur le côté éloigné de la bande de matériau (16).

10. Procédé selon l'une des revendications 1 à 9, **caractérisé en ce que** l'autre bande de matériau (21) est recouverte d'une plaque ou feuille (22) transparente dans la zone de branches de couverture (23).
